(19) Europäisches Patentamt
European Patent Office
Office européen des brevets

(11) Veröffentlichungsnummer: **0 007 020**
**B1**

(12) # EUROPÄISCHE PATENTSCHRIFT

(45) Veröffentlichungstag der Patentschrift: **14.10.81**

(51) Int. Cl.[3]: **C 07 F 9/165,** A 01 N 57/12

(21) Anmeldenummer: **79102038.1**

(22) Anmeldetag: **20.06.79**

(54) **Organische Phosphorsäureester, Verfahren zu ihrer Herstellung, ihre Verwendung, Schädlingsbekämpfungsmittel und ihre Herstellung.**

(30) Priorität: **05.07.78 JP 80934/78**

(43) Veröffentlichungstag der Anmeldung: **23.01.80 Patentblatt 80/2**

(45) Bekanntmachung des Hinweises auf die Patenterteilung: **14.10.81 Patentblatt 81/41**

(84) Benannte Vertragsstaaten: **BE CH DE FR GB IT NL**

(56) Entgegenhaltungen:
**DD-A-107 581**
**DE-A1-2 630 561**
**FR-A1-2 359 846**
**Chemical Abstracts, Band 88, Nr. 15, 10. April 1978 (COLUMBUS, OHIO, USA) V. V. KORMACHEV et al. »Some sulfur- and fluorine-containing organophosphorus compounds«, Seite 587, Spalte 1, Abstract Nr. 105463y**

(73) Patentinhaber: **NIHON TOKUSHU NOYAKU SEIZO K.K., No.8, 2-chome, Nihonbashi Muromachi, Chuo-Ku, Tokyo (JP)**

(72) Erfinder: **Saito, Junichi, 3-7-12, Osawa Mitaka-shi, Tokyo (JP)**
Erfinder: **Kudamatsu, Akio, 177, Kariyado, Nakahara-ku, Kawasaki-shi, Kanagawa-ken (JP)**
Erfinder: **Kume, Toyohiko, 3-18-1, Higashi-Toyoda, Hino-shi, Tokyo (JP)**
Erfinder: **Tsuboi, Shinichi, 999, Mogusa, Hino-shi, Tokyo (JP)**

(74) Vertreter: **Utermann, Jasper, Dr. et al, BAYER AG c/o Zentralbereich Patente, Marken und Lizenzen, D-5090 Leverkusen Bayerwerk (DE)**

EP 0 007 020 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Organische Phosphorsäureester, Verfahren zu ihrer Herstellung, ihre Verwendung, Schädlingsbekämpfungsmittel und ihre Herstellung

Die Erfindung betrifft organische Phosphorsäureester, die überlegene Wirkung als Schädlingsbekämpfungsmittel, insbesondere aber überlegene insektizide, akarizide und nematozide Wirkung zeigen, Verfahren zur Herstellung dieser Verbindungen und Schädlingsbekämpfungsmittel, insbesondere insektizide, akarizide und nematozide Mittel, welche diese Verbindungen als Wirkstoff enthalten.

Die erfindungsgemäßen organischen Phosphorsäureester haben die nachstehende Formel

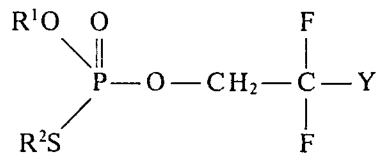
(I)

worin $R^1$ und $R^2$ gleich oder verschieden sind und eine Alkylgruppe mit 1–4 C-Atomen bedeuten und Y eine Fluoralkylgruppe mit 1–4 C-Atomen ist.

Gegenstand der Erfindung ist weiter ein Verfahren zur Herstellung der organischen Phosphorsäureester der allgemeinen Formel (I), welches dadurch gekennzeichnet ist, daß ein Thiophosphorylhalogenid der Formel

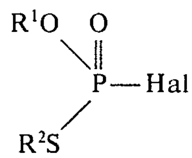
(II)

worin $R^1$ und $R^2$ die oben angeführte Bedeutung besitzen und Hal für Halogen steht, mit einem Halogenalkohol der Formel

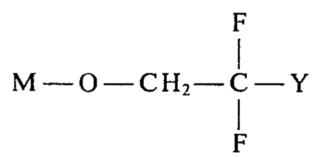
(III)

worin Y die oben angeführte Bedeutung besitzt und M Wasserstoff oder Alkalimetall bedeutet, oder einem seiner Salze umgesetzt wird.

Die Erfindung betrifft weiter Schädlingsbekämpfungsmittel, insbesondere insektizide, akarizide und nematozide Mittel, welche die Verbindungen der Formel (I) als Wirkstoff enthalten.

In der ausgelegten japanischen Patentanmeldung Nr. 51–101 131 ist beschrieben, daß das organische Phosphorsäureester der Formel

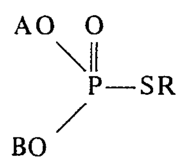
(IV)

worin R eine Niederalkylgruppe, A eine Niederalkylgruppe, Cycloalkylgruppe oder Halogenalkylgruppe und B eine Niederalkylgruppe oder Halogenalkylgruppe bedeutet, mit der Maßgabe, daß, wenn A und B beide Niederalkylgruppen darstellen, A und B voneinander verschieden sind, bei Anwendung auf die Wasseroberfläche fungizide Wirkung besitzt.

In der ausgelegten japanischen Patentanmeldung Nr. 50-25 557 ist beschrieben, daß die organische Phosphorsäureester der Formel

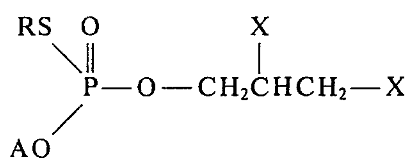
(V)

worin R eine Niederalkylgruppe oder dergleichen, A eine Niederalkylgruppe oder dergleichen und X Halogen bedeuten, fungizide Wirkung besitzt.

In der DD-A 107 581 wird beschrieben, daß der organische Phosphorsäureester der Formel

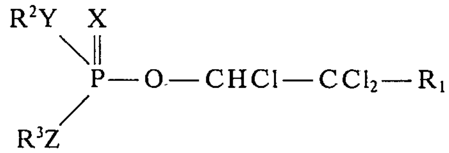

(VI)

worin $R^1$ Chlor oder eine Monochlormethylgruppe bedeutet, $R^2$ eine Alkylgruppe darstellt, $R^3$ für eine Alkylgruppe oder dergleichen steht und X, Y und Z Sauerstoff oder Schwefel sind, insektizide und akarizide Wirkung besitzen.

Es wurden Untersuchungen bezüglich der bioziden Wirkung der neuen organischen Phosphorsäureester angestellt, um Verbindungen mit überlegener insektizider, akarizider und nematozider Wirkung zu erhalten.

Es wurde gefunden, daß die organischen Phosphatderivate der Formel (I), welche andere Struktur besitzen als die bekannten Verbindungen mit den vorstehend angeführten Formeln, im Vergleich zu diesen bekannten Verbindungen überlegene insektizide, akarizide und nematozide Wirkung besitzen.

Wenn die Verbindung der Formel (I) ein O-fluorsubstituiertes-1-Propylthiophosphat ist, worin drei Esterstellungen speziell den O-Äthylester, S-n-Propylester und n-Propylester bedeuten, dessen 2-Stellung durch 2 Fluoratome und dessen 3-Stellung durch 2 – 3 Fluoratome substituiert ist, so ist sie außerordentlich rasch wirksam, zeigt Gaseffekt und weist besonders starke insektizide, akarizide und nematozide Wirkung auf. Die erfindungsgemäßen Verbindungen haben außerordentliche biologische Wirksamkeit die von den in den vorstehend angeführten japanischen Patentveröffentlichungen beschriebenen bekannten Verbindungen nicht erwartet werden konnten.

Die erfindungsgemäßen Verbindungen besitzen ausgezeichnete Wirksamkeit und zeigen genaue Kontrollwirkung gegenüber Schädlingen z. B. gegenüber schädlichen Insekten, Akariden und Nematoden, ohne schädliche Wirkung auf Pflanzen auszuüben. Sie können daher mit gutem Erfolg zur Bekämpfung von schädlichen stechenden und saugenden Insekten, Pflanzenparasiten und Schädlingen, welche Nahrungsmittel befallen oder gesundheitsschädliche Wirkung besitzen, eingesetzt werden.

Im folgenden werden Gattungen von schädlichen Insekten angeführt, gegen welche die erfindungsgemäßen Verbindungen eingesetzt werden können:

Coleoptera, z. B.:
Callosobruchus chinensis, Sitophilus zeamais, Tribolium castneum, Epilachna vigintioctomaculata, Agriotes fuscicollis und Anomala Rufocuprea;
Glossata, z. B.:
Lymantria dispar, Malacosoma neustria, Pieris rapae;
Spodoptera, z. B.:
Chilo suppressalis, Adoxophyes orana und Ephestia cautella;
Hemiptera, z. B.:
Nephotettix cincticeps, Nilaparvata lugens, Pseudococcus comstocki, Unaspis yanonensis, Myzus persicae, Aphis pomi und Rhopalosiphum pseudobrassicae;
Orthoptera, z. B.:
Blatella germanica, Periplaneta americana und Gryllotalpa africana;
Isoptera, z. B.:
Deucotermes speratus und Coptotermes formosanus;
Diptera, z. B.:
Musca domestica, Aedes aegypti, Hylemia platura, Culex pipiens, Anopheles sinensis und Culex tritaeniorhynchus;
Acari, z. B.:
Tetranychus telarius, Panonychus citri und Aculus pelekassi; und
Nematoden, z. B.:
Meloidogyne incognita acrita, Aphelenchoides besseyi und Heterodera glycines.

Auf dem Gebiet der Veterinärmedizin können die neuen, erfindungsgemäßen Verbindungen mit gutem Erfolg zur Bekämpfung von verschiedenen Tierparasiten (Endo- und Ektoparasiten) wie z. B. Akariden, Insekten und Nematoden eingesetzt werden.

In der folgenden Beschreibung werden die erfindungsgemäßen Verbindungen fallweise allgemein als Insektizide bezeichnet, um die Mittel zu bezeichnen, die gegenüber den in der vorstehenden Liste angeführten Insekten insektizide Wirkung besitzen.

Die erfindungsgemäßen Verbindungen der Formel (I) können nach den nachstehend beschriebenen allgemeinen Verfahren (A), (B) und (C) hergestellt werden.

(A)

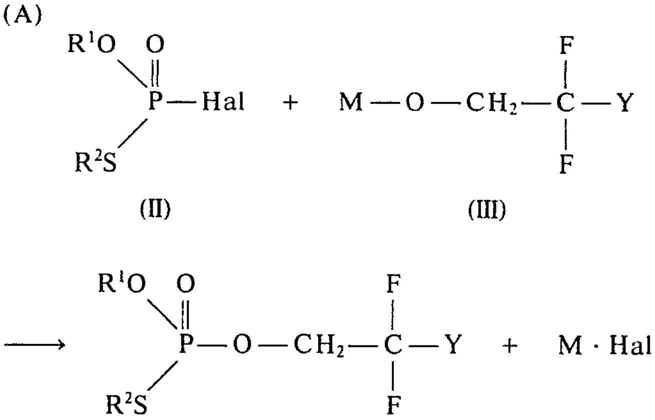

(II) (III)

In den Formeln haben $R^1$, $R^2$, Y, M und Hal die oben angeführte Bedeutung.

In dem oben angeführten Reaktionsschema bedeuten, $R^1$ und $R^2$ Alkylgruppen mit 1–4 C-Atomen. Als Beispiele für Y sind Fluoralkyle wie Mono-(Di- oder Tri-)fluormethyl, 1-(oder 2-)Fluoräthyl, 1,1-(1,2- oder 2,2-)Di-fluoräthyl und 1,1,2-(1,2,2- oder 2,2,2-)Tri-fluoräthyl zu nennen.

In dem vorstehend angeführten Reaktionsschema zur Herstellung der Verbindungen der Formel (I) kann als Ausgangsmaterial z. B. ein Thiophosphorylhalogenid der Formel (II) wie O-Äthyl-S-n-propylphosphor-chloridthioat eingesetzt werden. Auch das entsprechende Bromid kann eingesetzt werden.

Beispiele für das andere Ausgangsmaterial, den Halogenalkohol der vorstehend angeführten Formel (III) oder dessen Salz, sind 2,2,3,3-Tetrafluor-1-propanol und 2,2,3,3,3-Pentafluor-1-propanol. Anstelle der Fluoralkohole können auch deren Natrium- und Kaliumsalze eingesetzt werden.

Das vorstehend beschriebene Verfahren wird anhand des nachstehenden Ausführungsbeispiels näher beschrieben:

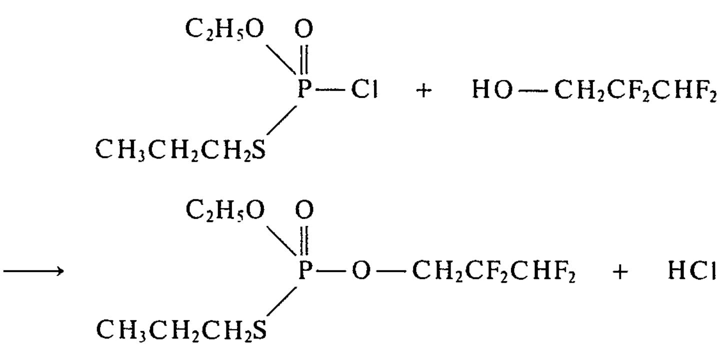

Das erfindungsgemäße Verfahren wird vorzugsweise in Gegenwart eines Lösungs- oder Verdünnungsmittels durchgeführt. Zu diesem Zweck ist jedes beliebige inerte Lösungs- oder Verdünnungsmittel geeignet. Beispiele für derartige Lösungs- und Verdünnungsmittel sind Wasser, aliphatische, alicyclische und aromatische Kohlenwasserstoffe (die gegebenenfalls chloriert sind) wie Hexan, Cyclohexan, Petroläther, Ligroin, Benzol, Toluol, Xylol, Methylenchlorid, Chloroform, Tetrachlorkohlenstoff, Äthylenchlorid, Trichloräthylen, Chlorbenzol oder dergleichen; Äther wie Diäthyläther, Methyläthyläther, Di-isopropyläther, Dibutyläther, Propylenoxid, Dioxan und Tetrahydrofuran; Ketone wie Aceton, Methyläthylketon, Methyliso-propylketon und Methyliso-butylketon; Nitrile wie Acetonitril, Propionitril und Acrylnitril; Alkohole wie Methanol, Äthanol, Isopropanol, Butanol und Äthylenglycol; Ester wie Äthylacetat und Amylacetat; Amide wie Dimethylformamid und Dimethylacetamid; Sulfone und Solfoxide wie Dimethylsulfoxid und Sulfolan und organische Basen wie Pyridin.

Wie schon erwähnt, kann das erfindungsgemäße Verfahren in Gegenwart eines Säurebindemittels durchgeführt werden. Beispiele für solche sind die üblicherweise eingesetzten Hydroxide, Carbonate, Bicarbonate und Alkoholate von Alkalimetallen sowie tertiäre Amine wie Triäthylamin, Diäthylanilin und Pyridin.

Als Alternative zur Durchführung des Verfahrens in Gegenwart eines Säurebindemittels kann das Salz des Fluoralkohols, vorzugsweise das Alkalimetallsalz des entsprechenden Fluoralkohols, mit einem Phosphorsäurediestermonochlorid umgesetzt werden, um das gewünschte Produkt in guter Ausbeute und mit hohem Reinheitsgrad zu erhalten.

Das erfindungsgemäße Verfahren kann innerhalb eines weiten Temperaturbereichs durchgeführt werden. Im allgemeinen wird es bei Temperaturen zwischen −20°C und dem Siedepunkt des Reaktionsgemisches, vorzugsweise bei Temperaturen von 0 bis 100°C, durchgeführt. Die Umsetzung

wird vorzugsweise bei Normaldruck durchgeführt, kann jedoch auch bei erhöhtem oder vermindertem Druck vorgenommen werden.

(B)

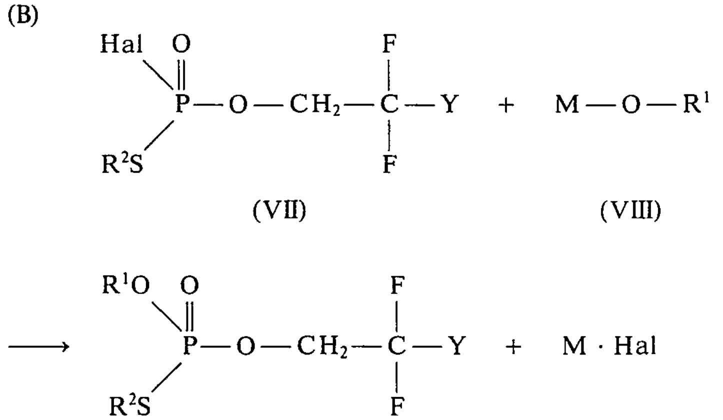

(VII) (VIII)

(I)

In den Formeln des Schemas haben $R^1$, $R^2$, Y, M und Hal die vorstehend angeführte Bedeutung.

In dem vorstehend angeführten Reaktionsschema zur Herstellung der Verbindungen der Formel (I) sind als Beispiele für das Ausgangsmaterial die Thiophorylhalogenide der Formel (VII), O-2,2,3,3-Tetrafluor-1-propyl-S-n-propylphosphorchloridthioat und O-2,2,3,3-Pentafluor-1-propylphosphorchloridthioat zu nennen. Anstatt der Chloride dieser Verbindungen können jedoch auch ihre Bromide eingesetzt werden.

Als Beispiel für das andere Ausgangsmaterial, den Alkohol der Formel (VIII) oder dessen Salze, ist Äthanol bzw. dessen Natrium- oder Kaliumsalz zu nennen.

Das vorstehende Verfahren wird anhand des folgenden Ausführungsbeispiels näher erläutert:

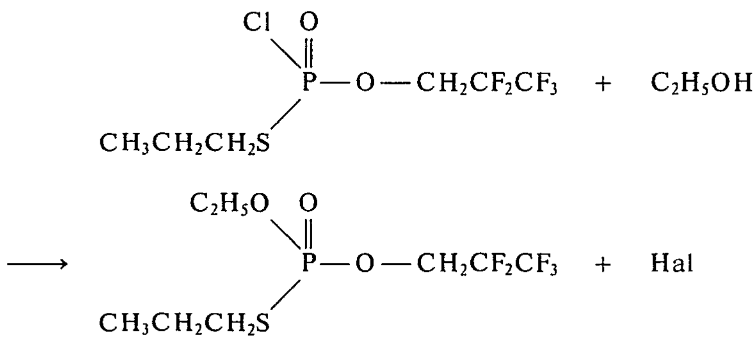

(C)

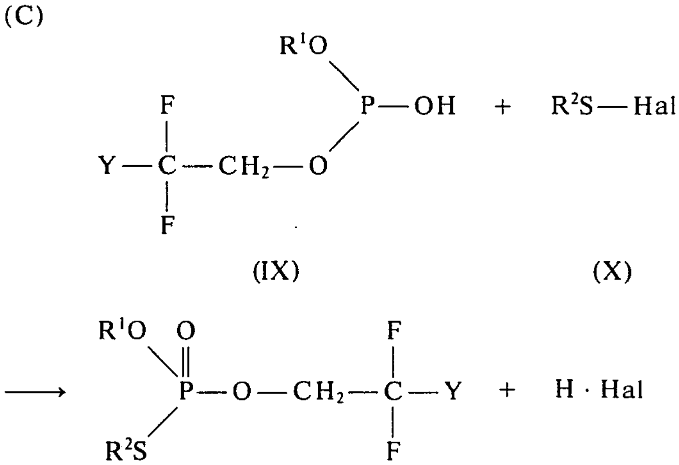

(IX) (X)

(I)

In dem Schema haben $R^1$, $R^2$, Y und Hal die oben angeführte Bedeutung.

In dem vorstehend angeführten Reaktionsschema für die Herstellung der Verbindungen der Formel (I) sind als Beispiele für die Ausgangsstoffe, die Phosphite der Formel (IX) O-Äthyl-O-2,2,3,3-tetrafluor-1-propylphosphit und O-Äthyl-O-2,2,3,3,3-pentafluor-1-propyl-phosphit zu nennen.

Als Beispiel für die anderen Ausgangsstoffe, die Sulfenylhalogenide der Formel (X), kann 1-Propansulfenylchlorid genannt werden. Anstatt des Chlorids kann auch das Bromid dieser Verbindung eingesetzt werden.

Jedes der Sulfenylchlorid oder -bromide die verwendet werden, kann durch Umsetzung des entsprechenden Disulfides mit Chlor, Brom, Sulfurylchlorid oder Sulfurylbromid erhalten werden.

Das vorstehende Verfahren wird anhand des nachstehenden Ausführungsbeispiels näher erläutert:

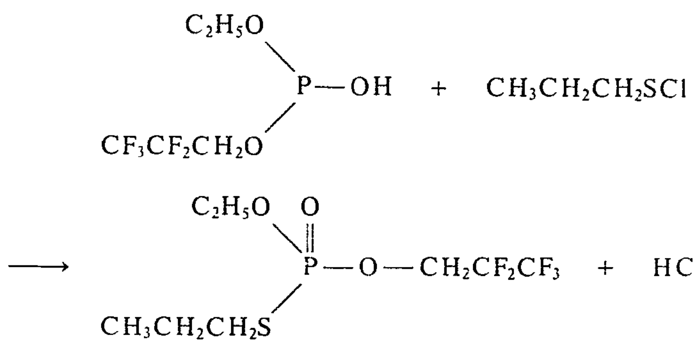

Die Verfahren (B) und (C) können in den oben schon genannten Lösungs- oder Verdünnungsmitteln durchgeführt werden, um das gewünschte Produkt in hoher Ausbeute und mit hohem Reinheitsgrad zu erhalten.

Das erfindungsgemäße Verfahren kann innerhalb eines weiten Temperaturbereichs durchgeführt werden. Es wird im allgemeinen innerhalb eines Temperaturbereichs von $-20°$ C bis zum Siedepunkt des Reaktionsgemisches, bevorzugt bei Temperaturen von 0 bis 100° C durchgeführt. Die Umsetzung wird im allgemeinen bei Normal-Druck vorgenommen, ist jedoch auch bei erhöhtem oder vermindertem Druck durchführbar.

Bei Verwendung als Schädlingsbekämpfungsmittel, insbesondere als insektizide, akarizide und nematozide Mittel können die erfindungsgemäßen Verbindungen mit Wasser verdünnt oder durch Zugabe von landwirtschaftlichen verträglichen Hilfsstoffen nach den üblichen Verfahren zur Herstellung von landwirtschaftlichen Chemikalien in verschiedene Formulierungen übergeführt werden. Bei der tatsächlichen Anwendung können die Formulierungen so, wie sie sind oder nach Verdünnung mit Wasserstoff auf die gewünschten Konzentrationen eingesetzt werden.

Unter den landwirtschaftlich verträglichen Hilfsstoffen sind inerte Lösungs- oder Verdünnungsmittel (Füll- oder Trägermittel) zu verstehen. Sie werden dazu verwendet, die Wirkstoffe auf schädliche Insekten, Akariden, Nematoden und/oder den Lebensraum dieser Schädlinge aufzubringen bzw. aufzutragen.

Andere Beispiele für Hilfsstoffe sind verschiedene oberflächenaktive Mittel und/oder organische Substanzen wie Stabilisatoren, Spreitmittel, Kleber, Treibmittel für Aerosole sowie synergistische Mittel, welche dazu dienen, die Wirkung der Wirkstoffe voll zu entfalten, zu erhalten und zu fördern.

Beispiele für geeignete Lösungsmittel sind Wasser, organische Lösungsmittel wie aliphatische und alicyclische Kohlenwasserstoffe wie n-Hexan, Industriebenzine, wie Petroläther, Lösungsmittelnaphtha und Erdölfraktionen wie Paraffinwachs, Kerosin, Gasöl, Mittelöl und Schweröl, aromatische Kohlenwasserstoffe, wie Benzol, Toluol, Xylol und aromatisches Naphtha, halogenierte Kohlenwasserstoffe, wie Trichlorfluormethan, Dichlordifluormethan, 1,2,2-Trichlor-1,1,2-trifluoräthan und Chlorbenzol, Alkohole, wie Methylalkohol, Äthylalkohol, Propylalkohol und Äthylenglykol, Äther, wie Diäthyläther, Äthylenoxid und Dioxan, Alkoholäther, wie Äthylenglykolmonomethyläther, Ketone, wie Aceton und Isophoron, Ester, wie Äthylacetat und Amylacetat, Amide, wie Dimethylformamid und Dimethylacetamid und Sulfoxide wie Dimethylsulfoxid. Beispiele für Verdünnungsmittel (Füll- oder Trägermittel) sind pflanzliche Pulver, Mineralpulver, wie Tone, z. B. Kaolinite, Montmorillonite, Attapulgite, Talk, Pyrohphyllit, Glimmer, Gips, Calzit, Vermiculit, Dolomit, Apatit, gelöschter Kalk, Magnesiumkalk, Diatomit; anorganische Salze, wie Kalziumkarbonat; Schwefel und Bimsstein; synthetische Mineralpulver, wie hochdisperse Kieselsäure und synthetisches Aluminiumoxid; und synthetische Harze, wie Phenolharze, Harnstoffharze und Vinylharze.

Als Beispiele für oberflächenaktive Mittel seien anionische oberflächenaktive Mittel, wie Alkylsulfate, z. B. Natriumlaurylsulfat, Arylsulfonsäure, z. B. Alkylarylsulfonat und Natriumalkylnaphthalinsulfonat, kationische, oberflächenaktive Stoffe, wie Alkylamine, z. B. Laurylamin, Stearyltrimethylammoniumchlorid, Alkyldimethylbenzylammoniumchlorid und Polyoxyäthylenalkylamine oder dergleichen, nichtionogene oberflächenaktive Stoffe, wie Polyoxyäthylenglycoläther, z. B. Polyoxyäthylenalkylaryläther, Polyoxyäthylenalkylphenyläther oder dergleichen, Polyoxyäthylenglycolester

wie Polyoxyäthylenfettsäureester, mehrwertige Alkoholester, wie Polyoxyäthylensorbitanmonolaurat und amphotere oberflächenaktive Mittel genannt.

Beispiele für organische Materialien sind Stabilisatoren; Spreitmittel, Kleber, wie landwirtschaftliche Seifen, Caseinkalk, Natriumalginat, Polyvinylalkohol, Einweichmittel, Cumaron-Inden-Harze und Polyvinylbutyläther; Treibmittel für Aerosole wie halogenierte Kohlenwasserstoffe, z. B. Freon; Verbrennungsmittel, für die Verräucherung, wie Nitrate, Zinkstaub und Dicyandiamid; sauerstoffbildende Mittel, wie Perchlorate und Dichromate; phytotoxizitätsverringernde Mittel, wie Zinksulfat. Eisenchlorid und Kupfernitrat; die Wirkungsdauer verlängernde Mittel, wie chloriertes Terphenyl; Dispersionsstabilisatoren, wie Casein, Traganth, Carboxymethylcellulose und Polyvinylalkohol; und synergistische Mittel bzw. Wirkstoffe.

Die erfindungsgemäßen Verbindungen können nach bei der Herstellung von landwirtschaftlichen Chemikalien üblichen Verfahren in verschiedene Formulierungen übergeführt werden.

Als Beispiele für solche Formulierungen seien Sprühmittel, wie emulgierbare Konzentrate, Öllösungen, benetzbare Pulver, Tabletten, lösliche Pulver, Suspensionen, Lösungen, Stäube, Granulate, pulverförmige Kompositionen, Räuche, Aerosole und Pasten genannt.

Die erfindungsgemäßen insektiziden, akariziden und nematoziden Kompositionen können den Wirkstoff in Mengen von 0,1 – 95 Gew.-%, vorzugsweise von 0,5 – 90 Gew.-%, enthalten.

Bei der tatsächlichen Anwendung beträgt der Wirkstoffgehalt in den Formulierungen der gebrauchsfertigen Präparate im allgemeinen 0,0001 – 20 Gew.-%, vorzugsweise 0,005 – 10 Gew.-%. Der Wirkstoffgehalt kann je nach der Form der Formulierung, Art, Zweck, Zeit und Ort der Anwendung und dem Befall mit schädlichen Insekten, Akariden und Nematoden verändert werden.

Nach Bedarf können die erfindungsgemäßen Verbindungen zusammen mit anderen Schädlingsbekämpfungsmitteln wie Insektiziden, Fungiziden, Akariziden, Nematoziden, Antivirusmitteln, Herbiziden, Pflanzenwachstumsregulatoren, Lockstoffen, wie z. B. organischen Phosphatverbindungen, Carbamatverbindungen, Dithio- (oder Thiol-)carbamatverbindungen, organischen Chlorverbindungen, Dinitroverbindungen, Organoschwefel- oder Organometallverbindungen, Antibiotika, substituierten Diphenylätherverbindungen, Harnstoffverbindungen und Triazinverbindungen und/oder Düngemitteln eingesetzt werden.

Die verschiedenen Formulierungen und gebrauchsfertigen Präparate, welche den erfindungsgemäßen Wirkstoff enthalten, können nach auf dem Gebiet der Agrikultur-Chemie allgemein üblichen Verfahren, wie Sprühen, Versprühen von Flüssigkeiten, Vernebeln, Zerstäuben, Bestäuben, Verstreuen von Granulaten, Aufbringen auf die Wasseroberfläche; Verräuchern, Aufbringen auf das Erdreich, z. B. Einverleiben, Besprengen, Verdampfen und Berieseln; Aufbringen auf die Oberfläche, z. B. Bedecken, Anbringen von Streifen, Bedecken mit Pulver und Bedecken; Eintauchen und das Anbringen von Ködern eingesetzt werden. Außerdem kann das sogenannte Ultra-Low-Volume-Verfahren angewandt werden, welches Wirkstoffgehalte von 95 – 100% ermöglicht.

Die Dosierungsmengen der Formulierung oder des Präparates pro Flächeneinheit betragen etwa 0,03 bis etwa 10 kg/ha, vorzugsweise 0,3 bis 6 kg/ha bezogen auf den Wirkstoff. Nach Bedarf können diese Mengen jedoch über- oder unterschritten werden.

Ein weiteres Ziel der Erfindung besteht in der Schaffung einer insektiziden, akariziden und nematoziden Zusammensetzung, welche als Wirkstoff eine Verbindung der oben angeführten Formel (I), ein Verdünnungsmittel (Füll- oder Trägermittel) und/oder ein oberflächenaktives Mittel und nach Bedarf eine organische Substanz enthält.

Die Erfindung wird anhand der nachstehend angeführten Beispiele näher erläutert.

### Beispiel 1 (benetzbares Pulver)

15 Teile der erfindungsgemäßen Verbindung Nr. 1 (gemäß Herstellungsbeispiel 1), 80 Teile eines 1 : 5-Gemisches aus Kieselgur und Kaolin und 5 Teile Polyoxyäthylenalkylphenyläther wurden vermahlen und durch Mischen in ein benetzbares Pulver übergeführt. Das Pulver wurde mit Wasser auf eine Konzentration von 0,05% verdünnt und auf die schädlichen Insekten, Akariden und Nematoden und/oder deren Lebensraum aufgesprüht.

### Beispiel 2 (emulgierbares Konzentrat)

30 Teile der erfindungsgemäßen Verbindung Nr. 2 (gemäß Herstellungsbeispiel 1), 30 Teile Xylol, 30 Teile Methylnaphthalin und 10 Teile Polyoxyäthylenalkylphenyläther wurden unter Rühren in ein emulgierbares Konzentrat übergeführt, das mit Wasser auf eine Konzentration von 0,05% verdünnt und auf die schädlichen Insekten, Akariden und Nematoden und/oder deren Lebensraum aufgesprüht wurde.

Beispiel 3 (Staub)

2 Teile der erfindungsgemäßen Verbindung Nr. 1 und 98 Teile eines (1 : 3)-Gemisches aus Talk und Ton wurden zu einem Staub vermahlen und dabei vermischt. Der Staub wurde auf schädliche Insekten, Akariden und Nematoden und/oder deren Lebensraum verstreut.

Beispiel 4 (Staub)

1,5 Teile der erfindungsgemäßen Verbindung Nr. 2, 0,5 Teile Isopropylhydrogenphosphat und 98 Teile eines (1 : 3)-Gemisches aus Talk und Ton wurden zu einem Staub vermahlen und dabei miteinander vermischt. Der Staub wurde auf die schädlichen Insekten, Akariden und Nematoden und/oder deren Lebensraum gestreut.

Beispiel 5 (Granulat)

10 Teile der erfindungsgemäßen Verbindung Nr. 1, 10 Teile Bentonit, 78 Teile eines (1 : 3)-Gemisches aus Talk und Ton und 2 Teile Ligninsulfonat wurden vermischt und mit 25 Teilen Wasser versetzt. Die Mischung wurde innig vermengt und mittels Extrusionsgranulator in ein feinteiliges Granulat mit einer Teilchengröße von 340–700 µm übergeführt, welches bei 40–50°C getrocknet und dann auf die schädlichen Insekten, Akariden und Nematoden und/oder deren Lebensraum aufgebracht wurde.

Beispiel 6 (Granulat)

95 Teile Ton mit Korngrößen von 0,2–2 mm wurden in einen Rotationsmischer eingebracht und während dessen Rotation gleichmäßig mit einer Lösung aus 5 Teilen der erfindungsgemäßen Verbindung Nr. 2 in einem organischen Lösungsmittel besprüht. Durch Trocknen bei 40–50°C wurde ein beschichtetes Granulat erhalten, das auf die schädlichen Insekten, Akariden und Nematoden und/oder deren Lebensraum versprüht wurde.

Beispiel 7 (ölige Lösung)

0,5 Teile der erfindungsgemäßen Verbindung Nr. 1, 20 Teile einer hochsiedenden aromatischen Verbindung und 79,5 Teile Kerosin wurden durch Mischen in eine ölige Lösung übergeführt, die auf die schädlichen Insekten, Akariden und Nematoden und/oder deren Lebensraum aufgebracht bzw. versprüht wurde.

Im Vergleich zu in der Literatur beschriebenen Wirkstoffen mit ähnlicher Struktur oder bekannten Verbindungen, die ähnliche Wirkung aufweisen, sind die erfindungsgemäßen Wirkstoffe durch wesentlich verbesserte Wirkung und sehr geringe Toxizität gegenüber warmblütigen Tieren gekennzeichnet und haben daher großen Nutzwert.

Die unerwartete Überlegenheit und außerordentliche Wirksamkeit der erfindungsgemäßen Wirkstoffe geht aus den nachstehenden Versuchsbeispielen hervor, in welchen die erfindungsgemäßen Verbindungen auf verschiedene schädliche Insekten, Akariden und Nematoden angewandt wurden.

Testbeispiel 1

Versuch auf Wirksamkeit gegen Larven von Spodoptere litura

Herstellung der Versuchslösung

Lösungsmittel: 3 Gewichtsteile Xylol
Emulgator: 1 Gewichtsteil Polyoxyäthylenalkylphenyläther

Um ein geeignetes Präparat der Wirkstoffverbindung herzustellen, wurde 1 Gewichtsteil Wirkstoff kräftig mit dem Lösungsmittel und dem Emulgator in den genannten Mengen gemischt. Das erhaltene emulgierbare Konzentrat wurde dann mit Wasser auf die vorgeschriebene Konzentration verdünnt.

Testverfahren

Süßkartoffelblätter wurden in die auf die vorgeschriebene Konzentration verdünnte Lösung eingetaucht, getrocknet und in eine Petrischale von 9 cm Durchmesser eingebracht. Dann wurden 10

Larven der Spodoptera litura im 3. Entwicklungsstadium in die Schale gegeben. Die Schale wurde 24 Stunden lang in einer Klimakammer bei 28° C gehalten, nach Ablauf dieses Zeitraums wurde die Anzahl der getöteten Larven festgestellt und die Abtötungsrate berechnet.

Die Ergebnisse sind aus der nachstehenden Tabelle 1 ersichtlich.

Tabelle 1

Ergebnis des Tests auf Wirksamkeit gegen Larven der Spodoptera litura

| | Abtötungsrate in %<br>Wirkstoffkonzentration: 1000 ppm |
|---|---|
| Verbindung Nr. | |
| 1 | 100 |
| 2 | 100 |
| Vergleichsverbindung | |
| IV-1 | 0 |
| V-1 | 20 |
| VI-1 | 0 |
| VI-2 | 0 |

Anmerkung: 1) Die Numerierung der Verbindungen entspricht jener der Herstellungsbeispiele.

2) Vergleichsverbindungen IV-1:

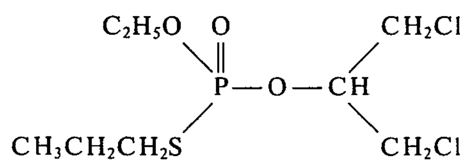

(beschrieben in der ausgelegten japanischen Patentanmeldung Nr. 51-101 131).

3) Vergleichsverbindung V-1:

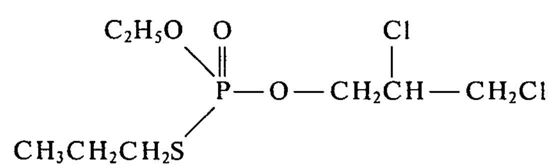

(beschrieben in der ausgelegten japanischen Patentanmeldung Nr. 50-25 557).

4) Vergleichsverbindung VI-1:

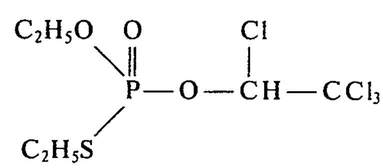

(beschrieben in der DD-A 107 581).

5) Vergleichsverbindung VI-2:

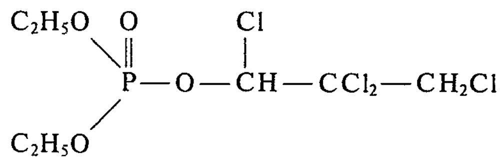

(beschrieben in der DD-A 107 581).

### Testbeispiel 2

Versuch auf Wirksamkeit gegen Callosobruchus chinensis

Testverfahren

Ein Filterpapier wurde auf den Boden einer Petrischale von 9 cm Durchmesser gelegt, die in 1 ml einer wäßrigen Lösung des Wirkstoffs, der auf die vorgeschriebene Konzentration wie in Beispiel 1 beschrieben verdünnt worden war, eingebracht wurde. Dann wurden 20 Exemplare von Callosobruchus chinensis in die Schale eingesetzt und diese wurde 24 Stunden lang in einer Klimakammer bei 28°C gehalten. Nach Ablauf dieses Zeitraums wurde die Anzahl der getöteten Insekten festgestellt und die Abtötungsrate berechnet.

Die Ergebnisse sind aus der nachstehenden Tabelle 2 ersichtlich.

Tabelle 2

Ergebnis des Tests auf Wirksamkeit gegen Callosobruchus chinensis

| | Abtötungsrate in % Wirkstoffkonzentration in ppm | |
|---|---|---|
| | 1000 | 10 |
| Verbindung Nr. | | |
| 1 | 100 | 100 |
| 2 | 100 | 100 |
| Vergleichsverbindung | | |
| IV-1 | 100 | 0 |
| V-1 | 100 | 0 |
| VI-1 | 100 | 0 |
| VI-2 | 100 | 0 |

Anmerkung: Die Verbindungen Nr. 1 und 2 und die Vergleichsverbindungen entsprechen den in Tabelle 1 angegebenen.

### Testbeispiel 3

Test auf Wirksamkeit gegen Nephottetix cincticeps die gegen organische Phosphat-Verbindungen resistent sind

Die wie in Beispiel 1 beschrieben hergestellte, wäßrige Lösung des Wirkstoffes, der auf die vorgeschriebene Konzentration verdünnt worden war, wurde in Mengen von etwa 10 ml pro Topf auf Reispflanzen aufgesprüht, welche etwa 10 cm hoch und in Töpfen von 12 cm Durchmesser gepflanzt waren. Nach dem Trocknen der Pflanzen wurde ein Drahtnetzkäfig von 7 cm Durchmesser und 14 cm Höhe über die Pflanzen gestülpt, dann wurden 30 weibliche Exemplare von Nephotettix cincticeps,

und zwar eines Stammes, der gegen organische Phosphatverbindungen resistent geworden war, in den Käfig eingebracht. Der Käfig wurde 24 Stunden in einer Klimakammer gehalten, nach Ablauf dieses Zeitraums wurden die toten Insekten gezählt und es wurde die Abtötungsrate berechnet.

Die Ergebnisse sind aus der nachstehenden Tabelle 3 ersichtlich.

Tabelle 3

Ergebnisse des Tests auf Wirksamkeit gegen gegenüber organischen Phosphatverbindungen resistent gewordene Nephotettix cincticeps

| | Abtötungsrate in % Wirkstoffkonzentration in ppm | |
|---|---|---|
| | 1000 | 100 |
| Verbindung Nr. | | |
| 1 | 100 | 100 |
| 2 | 100 | 100 |
| Vergleichsverbindung | | |
| IV-1 | 100 | 0 |
| V-1 | 70 | 0 |
| VI-1 | 100 | 0 |
| VI-2 | 0 | 0 |

Anmerkung: Die Nummern der Verbindungen und der Vergleichsverbindungen entsprechen den in Tabelle 1 angeführten.

Testbeispiel 4

Test auf Wirksamkeit gegen Musca domestica

Ein Filterpapier wurde auf den Boden einer Petrischale mit 9 cm Durchmesser gelegt, dann wurde 1 ml einer wäßrigen Zubereitung des Wirkstoffs, der auf die vorgeschriebene Konzentration wie in Beispiel 1 beschrieben verdünnt worden war, in die Schale eingebracht. Danach wurden 10 weibliche Imagines von Musca domestica in die Schale gelegt. Die Schale wurde 24 Stunden lang in einer Klimakammer bei 28°C gehalten. Nach Ablauf dieses Zeitraums wurde die Anzahl der toten Insekten gezählt und die Abtötungsrate berechnet.

Die Ergebnisse sind aus der nachstehenden Tabelle 4 ersichtlich.

Tabelle 4

Ergebnisse des Tests auf Wirksamkeit gegen Musca domestica

| | Abtötungsrate in % Wirkstoffkonzentration in ppm | |
|---|---|---|
| | 1000 | 100 |
| Verbindung Nr. | | |
| 1 | 100 | 100 |
| 2 | 100 | 100 |
| Vergleichsverbindung | | |
| IV-1 | 100 | 0 |
| V-1 | 100 | 0 |
| VI-1 | 100 | 0 |
| VI-2 | 60 | 0 |

Anmerkung: Die Nummern der Verbindungen und Vergleichsverbindungen entsprechen den in Tabelle 1 angeführten.

Testbeispiel 5

Test auf Wirksamkeit gegen Tetranychus telarius (Sprühtest)

Testverfahren

Feuerbohnenpflanzen im Einblattstadium, die in Töpfen mit 6 cm Durchmesser eingepflanzt waren, wurden mit 50–100 Imagines von Tetranychus telarius beimpft, welche Resistenz gegenüber handelsüblichen organischen Phsophatverbindungen aufgebaut hatten. Nach 2 Tagen wurde die wäßrige Formulierung des Wirkstoffs, der auf die vorgeschriebene Menge wie in Beispiel 1 beschrieben verdünnt worden war, in Mengen von 40 ml pro Topf auf die Töpfe aufgesprüht. Nach 10 Tagen in einem Treibhaus wurde die Kontrollwirkung bewertet und nach folgendem Index ausgewertet:

3 — keine überlebenden Imagines
2 — mehr als 0 und weniger als 5% überlebende Imagines bezogen auf den Kontrollversuch ohne Behandlung
1 — mehr als 5 und weniger als 50% überlebende Imagines bezogen auf den Kontrollversuch ohne Behandlung
0 — mehr als 50% überlebende Imagines bezogen auf den Kontrollversuch ohne Behandlung

Die Ergebnisse sind aus der nachstehenden Tabelle 5 ersichtlich.

Tabelle 5

Test auf Wirksamkeit gegen Tetranychus telarius

| | Abtötungsrate in % Wirkstoffkonzentration in ppm | |
|---|---|---|
| | 1000 | 100 |
| Verbindung Nr. | | |
| 1 | 3 | 3 |
| 2 | 3 | 3 |
| Vergleichsverbindung | | |
| IV-1 | 0 | 0 |
| V-1 | 2 | 0 |
| VI-1 | 0 | 0 |
| VI-2 | 0 | 0 |

Anmerkung: Die Nummern der Verbindungen und der Vergleichsverbindungen entsprechen den in Tabelle 1 angeführten.

Testbeispiel 6

Test auf Wirksamkeit gegen Culex pipiens

Testverfahren

In eine hohe Petrischale mit 9 cm Durchmesser wurden 100 ml einer wäßrigen Formulierung des Wirkstoffs, der auf die vorgeschriebene Konzentration wie in Beispiel 1 beschrieben verdünnt worden war, gegeben. Dann wurden 25 Larven von Culex pipiens im vierten Entwicklungsstadium in die Schale gegeben und diese wurde 24 Stunden lang in einer Klimakammer bei 28°C gehalten. Nach Ablauf dieses Zeitraums wurde die Anzahl der getöteten Larven gezählt und die Abtötungsrate berechnet.

Die Ergebnisse sind aus der nachstehenden Tabelle 6 ersichtlich.

Tabelle 6

Ergebnisse des Tests auf Wirksamkeit gegen Culex pipiens

| | Abtötungsrate in % Wirkstoffkonzentration in ppm | |
|---|---|---|
| | 1 | 0,1 |
| Verbindung Nr. | | |
| 1 | 100 | 100 |
| 2 | 100 | 100 |
| Vergleichsverbindung | | |
| IV-1 | 0 | 0 |
| V-1 | 100 | 0 |
| VI-1 | 0 | 0 |
| VI-2 | 0 | 0 |

Anmerkung: Die Nummern der Verbindungen und Vergleichsverbindungen entsprechen den in Tabelle 1 angeführten.

Testbeispiel 7

Test auf Wirksamkeit gegen Meloidogyne incognita acrita

Zubereitung der Testlösung

2 Teile Wirkstoff und 98 Teile Talk wurden miteinander vermahlen und vermischt.

Testverfahren

Die wie vorstehend beschrieben hergestellte Wirkstofformulierung wurde in Mengen von je 50, 25, 10 und 5 ppm unter Rühren gleichmäßig mit Erde vermischt und in Töpfe mit 1/5000 a Oberfläche eingebracht. Dann wurden 20 Tomatensamen (Varietät Kurihara) in jeden der Töpfe gesät und die Töpfe wurden im Treibhaus gehalten. Nach 4 Wochen wurden die Pflanzen vorsichtig aus den Töpfen gezogen, um die Wurzeln nicht zu beschädigen. Der Befallsgrad wurde an jeweils 10 Pflanzen geschätzt und nach folgendem Standard berechnet, um einen Wurzelknotenindex zu erhalten.

Befallsgrad:
0 — keine Bildung von Wurzelknoten (vollständige Kontrollwirkung)
1 — geringe Wurzelknotenbildung
3 — starke Wurzelknotenbildung
4 — sehr starke Wurzelknotenbildung

$$\text{Wurzelknotenindex} = \frac{\Sigma\,(\text{Wert für die Beschaffenheit} \times \text{Zahl der Schädlinge})}{(\text{Gesamtzahl der getesteten einzelnen Schädlinge}) \times 4} \times 100$$

In folgender Weise wurde die Kontrollwirkung der Bewertung zugrundegelegt:

$$\text{Kontrollwirkung} = \frac{\begin{matrix}(\text{Wurzelknotenindex der} \\ \text{unbehandelten Fläche})\end{matrix} - \begin{matrix}(\text{Wurzelknotenindex der} \\ \text{behandelten Fläche})\end{matrix}}{\text{Wurzelknotenindex der unbehandelten Kontrollfläche}} \times 100$$

100% Kontrollwirkung bedeutet vollständige Kontrolle.
Die Ergebnisse sind aus Tabelle 7 ersichtlich.

Tabelle 7

Ergebnisse des Tests auf Wirksamkeit gegen Meloidogyne incognita acrita

| | Abtötungsrate in % Wirkstoffkonzentration in ppm | |
|---|---|---|
| | 50 | 10 |
| Verbindung Nr. | | |
| 1 | 100 | 100 |
| 2 | 100 | 100 |
| Vergleichsverbindung | | |
| IV-1 | 0 | 0 |
| V-1 | 90 | 0 |
| VI-1 | 0 | 0 |
| VI-2 | 0 | 0 |

Anmerkung: Die Nummern der Verbindungen und der Vergleichsverbindungen entsprechen den in Tabelle 1 angeführten.

Das erfindungsgemäße Verfahren wird anhand der nachstehend angeführten Herstellungsbeispiele näher erläutert:

Herstellungsbeispiel 1

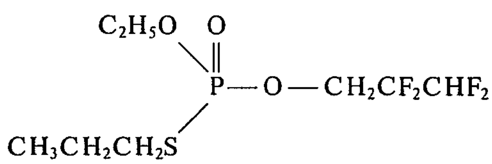

(Verbindung Nr. 1)

Einem Gemisch von 6,1 g O-Äthyl-S-n-propylphosphorchloridthioat, 4 g 2,2,3,3-Tetrafluor-1-propanol und 30 ml Toluol wurden unter Rühren bei 0—5°C 3,1 g Triäthylamin zugetropft. Nach beendeter Zugabe wurde die Temperatur allmählich auf 60°C erhöht und das Rühren wurde 2 Stunden lang fortgesetzt.

Nach Abkühlen wurde die Mischung nacheinander mit 1%iger, wäßriger Salzsäure, 2%igem, wäßrigem Kaliumhydroxid und Wasser gewaschen, über wasserfreiem Natriumsulfat getrocknet, abgedampft, um das Toluol zu entfernen und bei vermindertem Druck destilliert. Es wurden 6,4 g O-Äthyl-S-n-propyl-O-2,2,3,3-tetrafluor-1-propylphosphorthiolat erhalten.

Kp. 105—108°C/1,5 mm Hg.
n 1,4155.

Folgende Verbindung kann nach einem dem vorstehend beschriebenen ähnlichen Verfahren hergestellt werden:

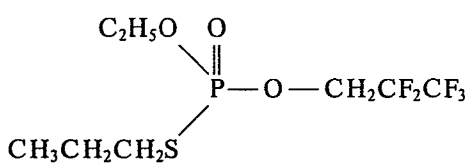

(Verbindung Nr. 2)

O-Äthyl-S-n-propyl-O-2,2,3,3,3-pentafluor-1-propylphosphorthiolat

**Patentansprüche**

1. Organische Phosphorsäureester der Formel

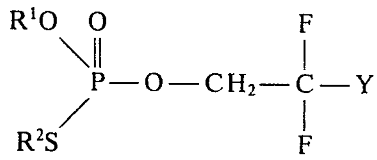

(I)

worin

$R^1$ und $R^2$ gleich oder verschieden sind und eine Alkylgruppe mit 1–4 C-Atomen bedeuten und
Y für eine Fluoralkylgruppe mit 1–4 C-Atomen steht.

2. Verfahren zur Herstellung von organischen Phosphorsäureestern, dadurch gekennzeichnet, daß man Thiophosphorylhalogenide der Formel

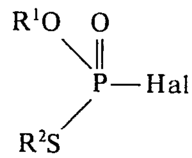

(II)

worin

$R^1$ und $R^2$ die oben angeführte Bedeutung haben, und
Hal für Halogen steht, mit einem Halogenalkohol der Formel

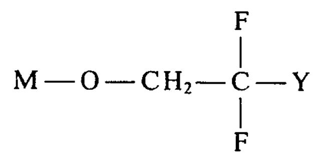

(III)

worin

Y die oben angeführte Bedeutung besitzt, während
M für Wasserstoff oder ein Alkalimetall steht, oder einem seiner Salze umsetzt oder

Verbindungen der Formel

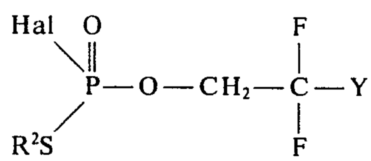

(VII)

worin $R^2$, Y und Hal die oben angeführte Bedeutung haben, mit Verbindungen der Formel

$$M—O—R^1 \qquad (VIII)$$

worin $R^1$ und M die oben angeführte Bedeutung haben, umsetzt oder Verbindungen der Formel

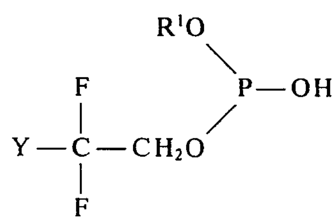

(IX)

worin $R^1$ und Y die oben angeführte Bedeutung haben, mit Verbindungen der Formel

$R^2S$-Hal

worin $R^2$ und Hal die oben angeführte Bedeutung haben, umsetzt.

3. Schädlingsbekämpfungsmittel, insbesondere insektizide, akarizide und nematozide Mittel, gekennzeichnet durch einen Gehalt an Verbindungen gemäß Anspruch 1.

4. Verwendung von Verbindungen gemäß Anspruch 1 zur Bekämpfung von Schädlingen, insbesondere von Insekten, Milben und Nematoden.

5. Verfahren zur Herstellung von Schädlingsbekämpfungsmitteln, insbesondere von insektiziden, akariziden und nematiziden Mitteln, dadurch gekennzeichnet, daß man Verbindungen gemäß Anspruch 1 mit Streckmitteln und/oder oberflächenaktiven Mitteln mischt.

**Claims**

1. Organic phosphoric acid esters of the formula

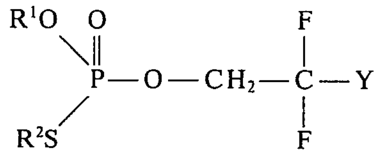

(I)

wherein
$R^1$ and $R^2$ are the same or different and denote an alkyl group with 1—4 C-atoms and
Y represents a fluoroalkyl group with 1—4 C-atoms.

2. Process for the preparation of organic phosphoric acid esters, characterised in that thiophosphoryl halides of the formula

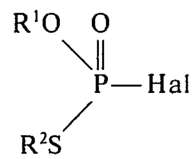

(II)

wherein
$R^1$ and $R^2$ have the meaning stated above and
Hal represents halogen,
are reacted with a halogenoalcohol of the formula

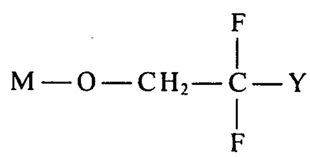

(III)

wherein
Y has the meaning stated above, while
M represents hydrogen or an alkali metal,
or one of the salts thereof, or compounds of the formula

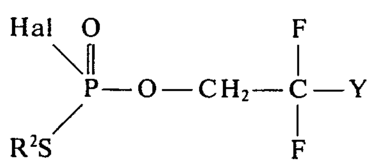

(VII)

wherein
$R^2$, Y and Hal have the meaning stated above,
are reacted with compounds of the formula

$$M—O—R^1 \qquad (VIII)$$

wherein
$R^1$ and M have the meaning stated above,
or compounds of the formula

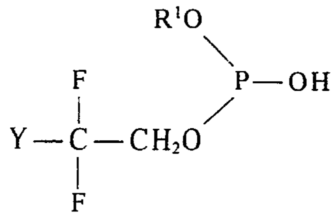
(IX)

wherein
$R^1$ and Y have the meaning stated above,
are reacted with compounds of the formula

$R^2S-Hal$

wherein
$R^2$ and Hal have the meaning stated above.

3. Agents for combating pests, in particular insecticidal, acaricidal and nematocidal agents, characterised in that they contain compounds according to Claim 1.

4. Use of compounds according to Claim 1 for combating pests, in particular insects, mites and nematodes.

5. Process for the production of agents for combating pests, in particular insecticidal, acaricidal and nematocidal agents, characterised in that compounds according to Claim 1 are mixed with extenders and/or surface-active agents.

**Revendications**

1. Esters organiques phosphoriques de formule:

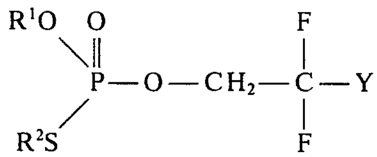
(I)

dans laquelle:
$R^1$ et $R^2$, identiques ou différents, représentent un groupe alkyle en $C_1-C_4$ et
Y représente un groupe fluoralkyle en $C_1-C_4$.

2. Procédé de préparation d'esters organiques phosphoriques, caractérisé en ce que l'on fait réagir des halogénures de thiophosphoryle de formule:

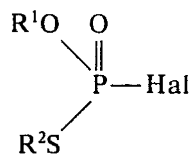
(II)

dans laquelle:
$R^1$ et $R^2$ ont les significations indiquées ci-dessus et
Hal représente un halogène,
avec un halogénoalcool de formule:

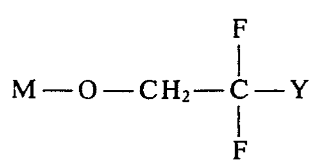
(III)

dans laquelle:
Y a la signification indiquée ci-dessus, et
M représente l'hydrogène ou un métal alcalin, ou l'un de ses sels, ou bien on fait réagir des composés de formule:

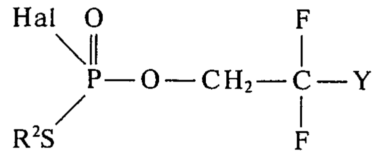

(VII)

dans laquelle:
$R^2$, Y et Hal ont les significations indiquées ci-dessus, avec des composés de formule:

$$M—O—R^1 \qquad (VIII)$$

dans laquelle:
$R^1$ et M ont les significations indiquées ci-dessus, ou bien on fait réagir des composés de formule:

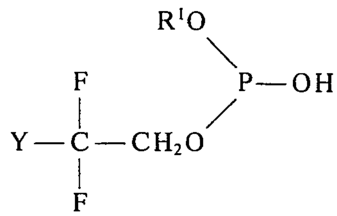

(IX)

dans laquelle:
$R^1$ et Y ont les significations indiquées ci-dessus, avec des composés de formule:

$$R^2S-Hal$$

dans laquelle:
$R^2$ et Hal ont les significations indiquées ci-dessus.

3. Produits pesticides, en particulier produits insecticides, acaricides et nématocides, caractérisés en ce qu'ils contiennent des composés selon la revendication 1.

4. Utilisation des composés selon la revendication 1 pour combattre les parasites, en particulier les insectes, les acares et les nématodes.

5. Procédé de préparation de produits pesticides, en particulier de produits insecticides, acaricides et nématocides, caractérisé en ce que l'on mélange des composés selon la revendication 1 avec des diluants et/ou des agents tensio-actifs.